# EUROPEAN PATENT APPLICATION

(11) **EP 1 848 177 A1**
(43) Date of publication of application: **24.10.2007**
(21) Application number: 07251702.2
(22) Date of filing: 23.04.2007
(51) Int. Cl.: H04L 29/06, G06F 21/00

(54) **Method for managing user domain**

(30) Priority: 21.04.2006 KR 20060036227; 01.05.2006 KR 20060039253; 30.05.2006 KR 20060048931; 12.06.2006 KR 20060052430
(71) Applicant: PANTECH CO., LTD., Yeongdeungpo-gu Seoul (KR); Pantech & Curitel Communications Inc, Seoul (KR)
(72) Inventor: Jeong, So-young, Sinnae 2-dong, Jungrang-gu, Seoul (KR); Kim, Gun-wook, Seocho-gu, Seoul (KR); Park, Kyung, Seo-gu, Daejeon-Si (KR)
(74) Representative: Mounteney, Simon James

(57) **Abstract**

A method of delegating user domain management authority is disclosed to provide flexible and continuous user domain management. According to this method, user domain management authority may be delegated from a first device in the user domain to a second device in the user domain. Delegation of user domain management authority may be performed through consultation with a delegation agent such that delegation may occur when the first device having user domain management authority is lost, unavailable, or otherwise inoperable by a user. Delegation of user domain management authority may include transferring user domain management information, such as user domain policy, user domain master key, and user domain key chain, from the first device to the second device. Once the second device receives user domain management information, user domain management authority of the first device may be discharged and notice may be sent to devices in the user domain.

## Description

### BACKGROUND OF THE INVENTION

### FIELD OF THE INVENTION

The present invention relates to a method for managing a user domain, and more specifically, a method for delegating Digital Rights Management (DRM) authority for a user domain having wireless and wired devices.

### DISCUSSION OF THE BACKGROUND

With the increase of devices capable of delivering multimedia content to a user, a user may own, operate, or maintain control or responsibility over several devices, such as a networked home media center entertainment system and handheld devices with varying degrees of network connectivity. The handheld devices may include a mobile phone and a portable music player. The network connectivity may include, for example, wireless connectivity through a mobile phone or a wired broadband internet connection through a personal computer. The user may purchase and download content, such as multimedia content, or programs for operation on one of the several devices over the network connection.

However, the user may also desire to operate the content or programs on other devices owned by the user. Therefore, the user may establish a user domain, which may include many devices owned, operated, controlled, or under the responsibility of the user. The user may add devices to the user domain, and may use a device in the user domain to purchase content useable in the user domain from a content provider. Further, the user may share content between devices in the user domain via network connectivity or via storage memory suitable for transferring content between devices. Alternatively, such as where content is streamed over a network connection, the user may share an authorization to stream the content among other devices in the user domain to allow other devices to also stream the content over the network connection.

User domain means the user group that may share Digital Rights Management (DRM) content. A device may include any device that may share DRM content within the user domain.

Thus, a content provider may allow replication and use of content among devices in the user's user domain. Further, the content provider may limit and/or prohibit distribution and use of such content to devices outside the user domain.

A user domain may be created by a user through the operation of one device in the user domain with network connectivity. For example, a user may create a user domain by operating a device to view a list of possible domain policies. Various domain policies may be developed, and one of which may be selected by a user as most appropriate for that user. A Secure Content Exchange (SCE) enabler may support only a single domain policy for a user domain. Domain policies for user domains, issued by a domain authority, may include such constraints as the maximum number of devices in the user domain.

The domain authority may then provide the selected domain policy to a domain enforcement agent stored in the user's device. The device through the domain enforcement agent may create the user's user domain, and may include the device in the user domain.

The user may then add other devices to the user domain. For example, a user may connect a mobile phone, portable music player, and a Home Media Center to the device and add these devices to the user domain. The domain policy may limit the number of devices that may be added to the user domain, and the domain enforcement agent may prevent the number of devices added to the user domain from exceeding this limit.

To acquire content for use by the devices in the user's user domain, the user may use a device in the user domain to connect to the network and browse a content provider's catalog of available content. The user may then use the connected device to select content to purchase. The user may submit the user's selected domain policy to the content provider from the connected device. If the domain policy is acceptable to the content provider, the content provider may provide the user with a user domain rights object along with the content. The user domain rights object may authorize the user to share the content among other devices in the user domain. If the domain policy is not acceptable to the content provider, the content provider may offer the user to purchase a device rights object, which may authorize the user to use the content only in the connected device.

When a user acquires content with a user domain rights object, the user may wish to share the content among the devices in the user domain. The user may then connect the connected device to other devices in the user domain to transfer copies of the content and its corresponding user domain rights object to each device in the user domain.

When the user acquires a new device, the user may request to add the new device to the user domain. The SCE enabler may determine whether to the user's request to add a new device complies with the domain policy, and if so, may add the new device to the user domain. The SCE enabler may authenticate a device before it is added to a user domain by the domain enforcement agent.

An SCE enabler may enable a rights issuer, such as a content provider, to specify usage permissions for consumption of rights on and transfer of rights between devices that are in the user domain. Usage permissions may include permissions to play, copy and move content among devices in the user domain. An SCE enabler may also enable a rights issuer, such as a content provider, to specify usage permissions for rights among devices outside the user domain. Usage permissions may include permissions to copy and move content to devices outside the user domain. Alternatively, usage permissions may prohibit devices in the user domain from copying or moving content to devices outside the user domain.

The SCE enabler may permit the domain enforcement agent to enforce the domain policy and to perform user domain management according to the domain policy specified by the domain authority. User domain management may include such management tasks as adding to and removing devices from the user domain, and application of domain policy.

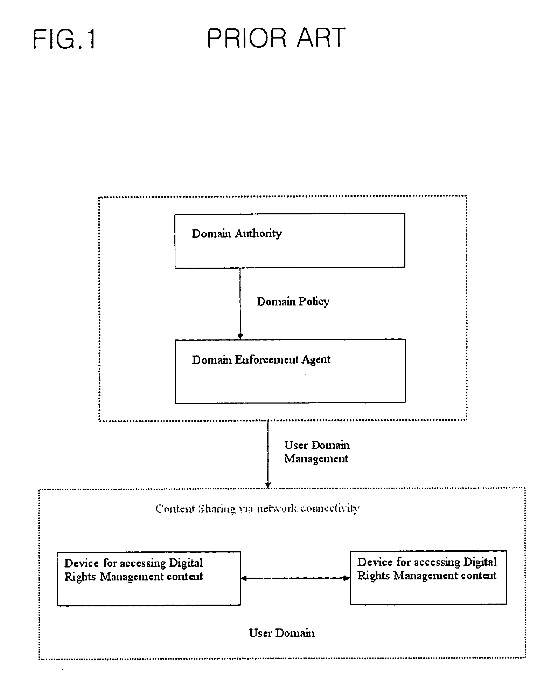

The Open Mobile Alliance (OMA) DRM V2.0 for SCE, suggested by OMA Mobile application software standardization organization, introduced the concept of 'User Domain' so that a user can directly perform user domain management instead of performing user domain management through a rights issuer such as a content provider. Therefore OMA also introduced the concept of domain authority and domain enforcement agent as illustrated by FIG. 1 so that defining and describing a domain policy can be performed by the domain authority and enforcement of the domain policy can be performed by the domain enforcement agent.

The domain authority and domain enforcement agent may each be a separate entity or may be integrated into a single entity.

As shown in FIG. 1, a domain authority may define and describe the domain policy and may deliver such domain policy to the domain enforcement agent. The domain enforcement agent may receive the domain policy from the domain authority, and may define and manage the user domain based on the received domain policy. That is, the user domain generated by the domain enforcement agent is also managed by the domain enforcement agent. If the domain authority and domain enforcement agent are integrated as a single entity, the domain authority may define the user domain and may perform domain management without interfacing with the domain enforcement agent.

A domain manager may be an entity that manages the user domain and possesses the domain enforcement agent when the domain enforcement agent is an individual entity. A domain manager may be an entity that manages the user domain and possesses the domain enforcement agent and domain authority when these features are integrated in a single entity. Hereinafter, the entity that manages the user domain will be referred to as domain manager, which shall refer to both individual and integrated entities.

However, in conventional user domain management, a user cannot transfer the authority for managing the user domain from one device to another device. Thus, if a device that manages the user domain is lost, damaged, or otherwise rendered inoperable by the user, the user domain managed by the lost device may not be managed by a different device in the user domain. Therefore, this invention improves the flexibility of user domain management by providing a method for delegating the user domain management authority to another device in the user domain such that the other device becomes the domain manager.

### SUMMARY OF THE INVENTION

This invention provides a method for delegating user domain management authority to allow continuous and flexible management of the user domain.

Additional features of the invention will be set forth in the description which follows, and in part will be apparent from the description, or may be learned by practice of the invention.

The present invention discloses a method for managing a user domain having a plurality of devices, the devices having network connectivity to download content and share the downloaded content among the devices in the user domain. The method comprises transferring user domain management authority from a first device to a second device.

The present invention also discloses a method for delegating management authority of a user domain having a plurality of devices, the devices having network connectivity to download content and share the downloaded content among the devices in the user domain. The method comprises transmitting, from a first device to a delegation agent, a request to transfer user domain management authority from a second device to the first device, transferring user domain management authority from a second device to the first device, and discharging the user domain management authority of the second device.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 shows a diagram of conventional User Domain Management.

FIG. 2 shows a Flowchart of User Domain Management Authority Delegation Method according to the first exemplary embodiment of the present invention.

FIG. 3 shows a Flowchart of User Domain Management Authority Delegation Method according to a second exemplary embodiment of the present invention.

FIG. 4 shows a Flowchart of User Domain Management Authority Delegation Method according to a third exemplary embodiment of the present invention.

FIG. 5 shows a Flowchart of User Domain Management Authority Delegation Method according to a fourth exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present. In contrast, when an element is referred to as being "directly connected to" another element, there are no intervening elements or layers present.

First, the delegation agent will be explained. Delegation of the user domain management authority may be made by an agent or by direct delegation from a first domain manager to a second domain manager. A delegation agent may execute a delegation of user domain management authority, and may be the domain authority or a rights issuer. A delegation agent may also be a service provider.

The User Domain Management Authority Delegation Method according to this first exemplary embodiment may change the device that possesses the authority for user domain management by information exchange between two devices, one of which may delegate the user domain management authority and the other one of which may receive such delegation without the help from or consultation with the delegation agent. In this case, the function of user domain management authority delegation may be explicitly described in the domain policy so that the user domain management authority can be delegated.

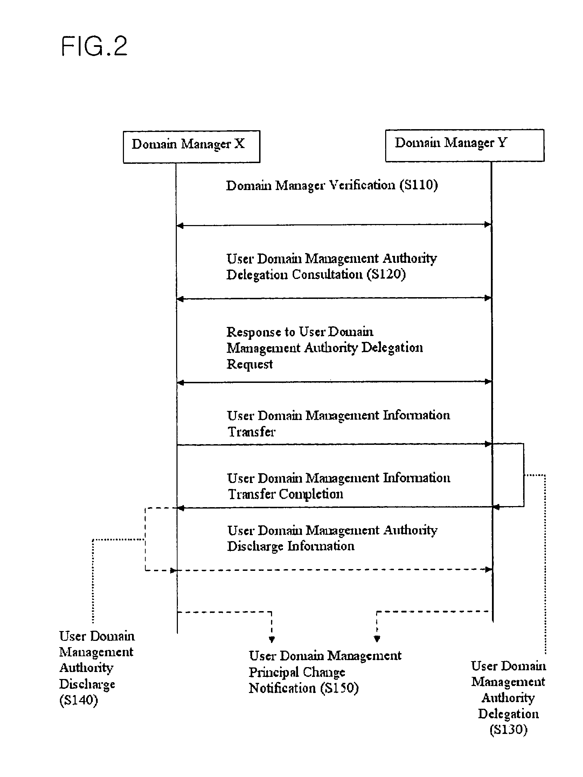

Specifically, the User Domain Management Authority Delegation Method according to this application example may include Domain Manager Verification Stage (S110), User Domain Management Authority Delegation Consultation Stage (S120) and User Domain Management Authority Delegation Stage (S130), as shown in FIG. 2.

For example, a user may change a device owned, controlled, or operated by the user. When this device possesses user domain management authority, this device may be referred to as Domain Manager X. When the user changes Domain Manager X, the user domain management authority possessed by Domain Manager X may be delegated to a different device, which shall be referred to as Domain Manager Y, in the user domain.

For such user domain management authority to be delegated, first, the Domain Manager X that possesses user domain management authority may process the verification of Domain Manager Y that will receive the delegation of user domain management authority through a Domain Manager Verification Stage (S110).

If the verification through above described Domain Manager Verification Stage (S110) is successful and the verification is confirmed, a consultation between Domain Manager X and Domain Manager Y about user domain management authority delegation may be executed through User Domain Management Authority Delegation Consultation Stage (S120). The above described consultation about user domain management authority delegation can include a request from Domain Manager X to Domain Manager Y to receive user domain management authority or, alternatively, a request from Domain Manager Y to Domain Manager X to delegate user domain management authority delegation. Then a response to the request to delegate user domain management authority may be made after the Domain Manager Y decides whether to receive the user domain management authority from Domain Manager X or after the Domain Manager X decides whether to delegate user domain management authority to Domain Manager Y, depending on whether the request was initiated by Domain Manager X or Domain Manager Y. If the response to above described request to delegate user domain management authority includes a refusal to delegate or accept such authority, the delegation process may be terminated.

If the response to the above described request to delegate user domain management authority includes an acceptance of such request, the user domain management authority may be delegated through above described User Domain Management Authority Delegation Stage (S130) by transferring user domain management information for user domain management from Domain Manager X to Domain Manager Y. User domain management information may include confidential information such as Domain Policy, Domain Master Key and Domain Key Chain.

Therefore, with such method, the Domain Manager X that manages the user domain can delegate user domain management authority to Domain Manager Y, thus enabling Domain Manager Y to execute the user domain management.

The User Domain Management Authority Delegation Method according to this first exemplary embodiment may also include a User Domain Management Authority Discharge Stage (S140).

In the User Domain Management Authority Discharge Stage (S140), Domain Manager X may be prevented from any further execution of domain management once Domain Manager X has delegated user domain management authority. In the User Domain Management Authority Discharge Stage (S140), after Domain Manager X has received notification from Domain Manager Y indicating that Domain Manager Y has received the user domain management information through above described User Domain Management Authority Delegation Stage (S130), Domain Manager X may transfer discharge information indicating Domain Manager X's discharge. Thereafter, Domain Manager X may be prevented from further execution of user domain management by, for example, changing the Master Key that is used for creation of Domain Key Chain so that Domain Manager X can no longer manage the user domain.

The User Domain Management Authority Delegation Method according to this exemplary embodiment may also include a User Domain Management Principal Change Notification Stage (S150).

In the User Domain Management Principal Change Notification Stage (S150), a notification message may be transmitted to the devices in the user domain that the domain manager has changed from Domain Manager X to Domain Manger Y. The User Domain Management Principal Change Notification may be transmitted from Domain Manger X, Domain Manager Y, or Delegation Agent.

When the User Domain Management Principal Change Notification is transmitted from Domain Manager X, Domain Manager X may provide notification of the User Domain Management Principal Change to the devices in the user domain in the User Domain Management Principal Change Notification Stage (S150). When the User Domain Management Principal Change Notification is transmitted from Domain Manager Y, Domain Manager Y may provide notification of the User Domain Management Principal Change to the devices in the user domain in the User Domain Management Principal Change Notification Stage (S150). When the User Domain Management Principal Change Notification is transmitted from Delegation Agent, the Delegation Agent may provide notification of the User Domain Management Principal Change to the devices in the user domain in the User Domain Management Principal Change Notification Stage (S150).

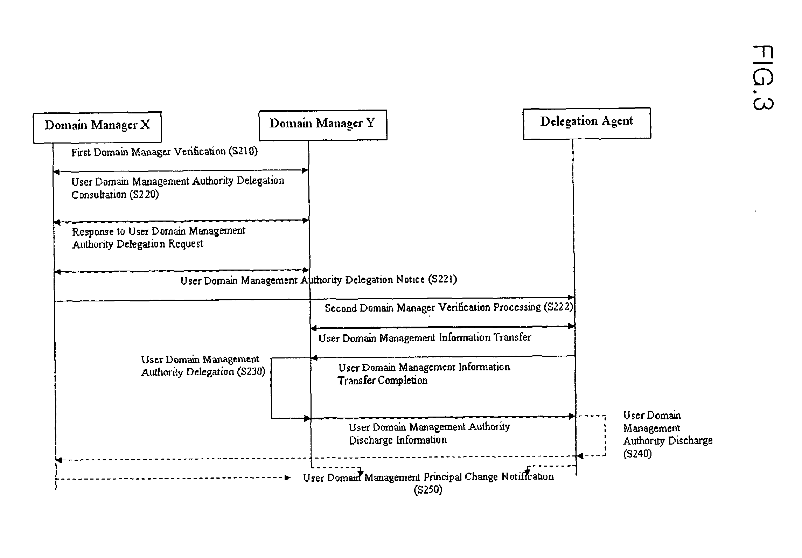

FIG. 3 shows a Flowchart of User Domain Management Authority Delegation Method according to a second exemplary embodiment of the present invention. The same or similar reference numerals may refer to the same or similar stages as described above, and repetitive description will be avoided.

According to the second exemplary embodiment, the User Domain Management Authority Delegation Method may include a Delegation Agent for the delegation of user domain management authority. This User Domain Management Authority Delegation Method may be effective through the Delegation Agent when direct delegation of user domain management authority between Domain Manager X and Domain Manager Y may not be proper, or when the service provider provides assistance or consultation during the delegation of user domain management authority.

According to the second exemplary embodiment, the User Domain Management Authority Delegation Method may include the First Domain Manager Verification Stage (S210), User Domain Management Authority Delegation Consultation Stage (S220), User Domain Management Authority Delegation Notice Stage (S221), the Second Domain Manager Verification Stage (S222), and User Domain Management Authority Delegation Stage (S230).

For example, if a user purchases a new device to replace Domain Manager X, the user domain management authority possessed by Domain Manager X may be delegated to the new device, Domain Manger Y.

To change the user domain management authority from Domain Manager X to Domain Manger Y, Domain Manager X may process the verification regarding the Domain Manager Y in First Domain Manager Verification Stage (S210).

If the verification through above described First Domain Manager Verification Stage (S210) is successful and the verification is confirmed, a consultation, which may include a request to transfer user domain management authority, between Domain Manager X and Domain Manager Y about delegation of user domain management authority may be executed through the above described User Domain Management Authority Delegation Consultation Stage (S220).

If a response to the above described request to delegate user domain management authority includes acceptance of the request, Domain Manager X, through User Domain Management Authority Delegation Notice Stage (S221), will notify the Delegation Agent having the user domain management information to delegate user domain management authority to Domain Manager Y.

Then the Delegation Agent that received the notification of User Domain Management Authority Delegation Notice from Domain Manager X will process the verification of Domain Manager Y through above described Second Domain Manager Verification Stage (S222). This verification processing may include a mutual verification process including evaluating whether Domain Manager Y is a member of the user domain created by Domain Manager X.

If the verification by above described Second Domain Manager Verification Stage (S222) is successfully completed, the Delegation Agent, through User Domain Management Authority Delegation Stage (S230), may delegate user domain management authority by transferring user domain management information to Domain Manager Y. User domain management information may include confidential information such as Domain Policy, Domain Master Key and Domain Key Chain for user domain management.

Therefore, with such method, the Domain Manager X that manages the user domain can delegate user domain management authority through Delegation Agent to Domain Manager Y, thus enabling Domain Manager Y to continuously execute user domain management and thus make it possible for flexible and continuous management of the user domain.

The User Domain Management Authority Delegation Method according to this second exemplary embodiment may include a User Domain Management Authority Discharge Stage (S240).

In the User Domain Management Authority Discharge Stage (S240), Domain Manager X may be prevented from any further execution of domain management once Domain Manager X has delegated user domain management authority. The User Domain Management Authority Discharge Stage (S240) of this second exemplary embodiment differs from the User Domain Management Authority Discharge Stage (S140) of the first exemplary embodiment because the Delegation Agent that transferred user domain management information removes the user domain management authority from Domain Manager X in the User Domain Management Authority Discharge Stage (S240) and discharges the user domain management authority from Domain Manager X by, for example, changing the Master Key that is used for creation of Domain Key Chain so that Domain Manager X can no longer manage the user domain.

The User Domain Management Authority Delegation Method according to this second exemplary embodiment may also include a User Domain Management Principal Change Notification Stage (S250).

In the User Domain Management Principal Change Notification Stage (S250), a notification message may be transmitted to the devices in the User Domain that the domain manager has changed from Domain Manager X to Domain Manger Y. The User Domain Management Principal Change Notification may be transmitted from Domain Manger X, Domain Manager Y, or Delegation Agent as described above for User Domain Management Principal Change Notification Stage (S150).

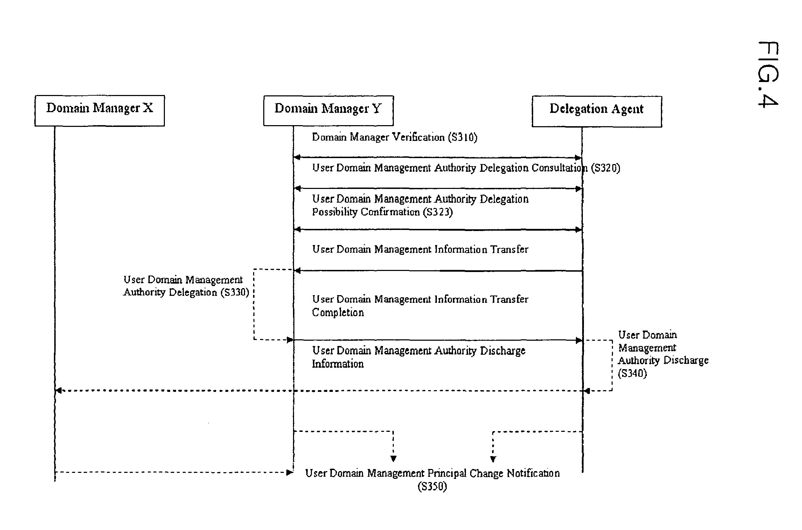

FIG. 4 shows a Flowchart of User Domain Management Authority Delegation Method according to a third exemplary embodiment of the present invention.

The User Domain Management Authority Delegation Method according to this third exemplary embodiment may enable continuous user domain management by transferring the user domain management authority from a current Domain Manager, such as Domain Manager X, to a new User Domain Manager, such as Domain Manager Y, through consultation between the intended new Domain Manager, such as Domain Manager Y, and a Delegation Agent. In such occasion, the Domain Management Authority Delegation Function may be explicitly described in the domain policy to have the user domain management authority to be delegated.

Specifically, the User Domain Management Authority Delegation Method according to this third exemplary embodiment may include a Domain Manager Verification Stage (S310), a User Domain Management Authority Delegation Consultation Stage (S320), a User Domain Management Delegation Possibility Confirmation Stage (S323) and a User Domain Management Authority Delegation Stage (S330).

For example, a user may have a device possessing user domain management authority for managing a user domain established by the user and managed by the user terminal. This user terminal may be Domain Manager X. If Domain Manager X is lost, stolen from user, or damaged such that it is inoperable, the user domain management authority possessed by Domain Manager X may be transferred to a new device Domain Manager Y, such as a personal computer, that is also a member of the user domain managed by Domain Manager X.

To delegate the user domain management authority from Domain Manager X to Domain Manager Y, first, the user may request delegation of user domain management authority to Delegation Agent. Alternatively, Delegation Agent may propose a transfer of user domain management authority to Domain Manager Y as requested by the user. In either situation, the Delegation Agent may process the verification of Domain Manager Y through Domain Manager Verification Stage (S310) for the purpose of delegating user domain management authority to Domain Manager Y.

Once the verification is successfully processed and the verification of Domain Manager Y is confirmed in the Domain Manager Verification Stage (S310), Domain Manager Y may be confirmed or authorized in the User Domain Management Delegation Possibility Confirmation Stage (S323). During the User Domain Management Delegation Possibility Confirmation Stage (S323), the task of confirming whether the User Domain Management Authority may be delegated to Domain Manger Y is performed. Specifically, the task of confirming whether the user domain management authority may be delegated to Domain Manger Y may be conducted by various methods in order to prevent the delegation of Domain Manager X's user domain management authority to an entity that is not authorized to receive the user domain management authority. For example, the user may register Domain Manager Y in advance as authorized to receive user domain management authority. Alternatively, the user may request that Domain Manager Y receive user domain management authority. Additionally, it may be verified that Domain Manager Y and Domain Manager X are possessed, operated by, or registered to the same user.

If it is decided that delegation of user domain management authority is possible in the above described User Domain Management Delegation Possibility Confirmation Stage (S323), the Delegation Agent, through User Domain Management Authority Delegation Stage (S330), may delegate user domain management authority by transferring user domain management information to Domain Manager Y. User domain management information may include confidential information such as Domain Policy, Domain Master Key and Domain Key Chain for user domain management.

Therefore, with such method, the user domain management authority can be delegated to Domain Manager Y, through consultation between Delegation Agent and Domain Manager Y. This exemplary embodiment enables Domain Manager Y to continuously execute the user domain management and thus makes it possible for flexible and continuous management of the user domain.

The User Domain Management Authority Delegation Method according to this third exemplary embodiment may include a User Domain Management Authority Discharge Stage (S340).

In the User Domain Management Authority Discharge Stage (S340), Domain Manager X may be prevented from any further execution of domain management once Delegation Agent has delegated user domain management authority. The User Domain Management Authority Discharge Stage (S340) of this third exemplary embodiment differs from the User Domain Management Authority Discharge Stage (S140) of the first exemplary embodiment because the Delegation Agent that transfers user domain management information also removes the User Domain Management Authority from Domain Manager X in the User Domain Management Authority Discharge Stage (S340) and discharges the user domain management authority from Domain Manager X by, for example, changing the Master Key that is used for creation of Domain Key Chain so that Domain Manager X can no longer manage the user domain.

The User Domain Management Authority Delegation Method according to this third exemplary embodiment may also include a User Domain Management Principal Change Notification Stage (S350).

In the User Domain Management Principal Change Notification Stage (S350), a notification message may be transmitted to the devices in the user domain that the user domain management authority has changed from Domain Manager X to Domain Manger Y. The User Domain Management Principal Change Notification may be transmitted from Domain Manager Y, or Delegation Agent as described above for User Domain Management Principal Change Notification Stage (S150).

Accordingly, when a Domain Manager that manages user domain becomes unavailable or needs to be changed for various reasons as explained above, continuous management of the user domain may be achieved by delegating user domain management authority to another Domain Manager.

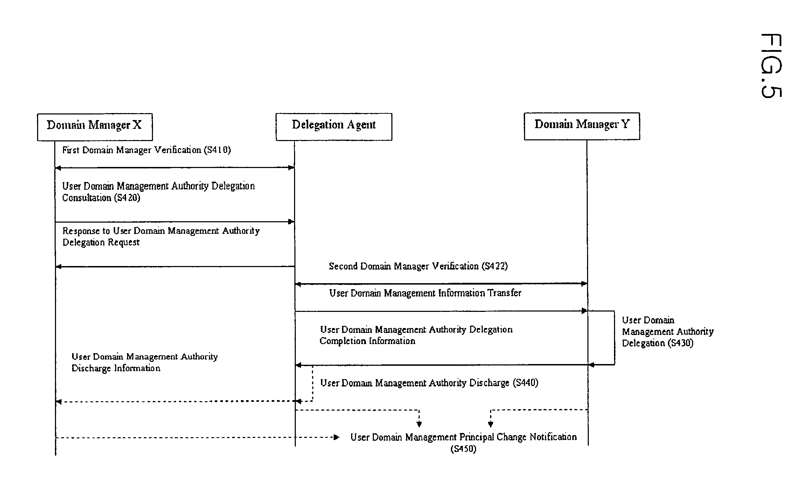

FIG. 5 shows a Flowchart of User Domain Management Authority Delegation Method according to a fourth exemplary embodiment of the present invention.

The User Domain Management Authority Delegation Method according to this fourth exemplary embodiment may enable continuous user domain management by transferring the user domain management authority from a current user domain manager, such as Domain Manager X, to a new user domain manager, Domain Manager Y, upon the request of the Domain Manager X.

Specifically, the User Domain Management Authority Delegation Method according to this fourth exemplary embodiment may include a First Domain Manager Verification Stage (S410), a User Domain Management Authority Delegation Request Stage (S420), a Second Domain Manager Verification Stage (S422) and User Domain Management Authority Delegation Stage (S430).

For example, a user may replace a device owned or controlled by the user. The user domain management authority possessed by Domain Manager X on the device may be delegated to Domain Manger Y that resides on a new device user terminal after the change. To transfer user domain management authority from Domain Manager X to Domain Manager Y, the Delegation Agent may first verify that Domain Manager X has user domain management authority in the First Domain Manager Verification Stage (S410).

If the verification of Domain Manager X's user domain management authority is successfully processed and confirmed in the First Domain Manager Verification Stage (S410), Domain Manager X may request the delegation of user domain management authority to Domain Manager Y from Delegation Agent in a User Domain Management Authority Delegation Request in User Domain Management Authority Delegation Consultation Stage (S420). The Delegation Agent may receive the User Domain Management Authority Delegation Request, may evaluate whether user domain management authority may be delegated to Domain Manager Y, and may respond to the User Domain Management Authority Delegation Request.

When the above described Delegation Agent transfers a positive response to the User Domain Management Authority Delegation Request to Domain Manager X, the delegation agent may process the verification of Domain Manager Y through the Second Domain Manager Verification Stage (S422). This Second Domain Manager Verification Stage (S422) can include validating whether Domain Manager Y is a member of user domain created by Domain Manager X.

If the verification in the Second Domain Manager Verification Stage (S422) is successfully completed and verification is confirmed, the Delegation Agent, through User Domain Management Authority Delegation Stage (S430), may delegate user domain management authority by transferring user domain management information to Domain Manager Y. User domain management information may include confidential information such as Domain Policy, Domain Master Key and Domain Key Chain for user domain management.

Therefore, the Domain Manager X can delegate user domain management authority, through Delegation Agent, to Domain Manager Y. This exemplary embodiment enables Domain Manager Y to continuously execute the User Domain Management and thus make it possible for flexible and continuous management of the user domain.

The User Domain Management Authority Delegation Method according to this fourth exemplary embodiment may include a User Domain Management Authority Discharge Stage (S440).

In the User Domain Management Authority Discharge Stage (S440), Domain Manager X may be prevented from any further execution of domain management once Domain Manager X has delegated user domain management authority. The User Domain Management Authority Discharge Stage (S440) of this fourth exemplary embodiment differs from the User Domain Management Authority Discharge Stage (S140) of the first exemplary embodiment because the Delegation Agent that transferred user domain management information also removes the user domain management authority from Domain Manager X in the User Domain Management Authority Discharge Stage (S440) and discharges the user domain management authority from Domain Manager X by, for example, changing the Master Key that is used for creation of Domain Key Chain so that Domain Manager X can no longer manage the user domain.

The User Domain Management Authority Delegation Method according to this fourth exemplary embodiment may also include a User Domain Management Principal Change Notification Stage (S450).

In the User Domain Management Principal Change Notification Stage (S450), a notification message may be transmitted to the devices in the user domain that the user domain management authority has changed from Domain Manager X to Domain Manger Y. The User Domain Management Principal Change Notification may be transmitted from Domain Manager Y, Domain Manager X, or Delegation Agent as described above.

Accordingly, because the Domain Manager that manages User Domain may be unavailable or may be changed for other various reasons, some examples of which are explained above, continuous user domain management may be possible by delegating user domain management authority to another Domain Manager with or without consultation with a Delegation Agent.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method for managing a user domain having a plurality of devices, the devices having network connectivity to download content and share the downloaded content among the devices in the user domain, the method comprising:
transferring user domain management authority from a first device to a second device.

2. The method of claim 1, wherein user domain management authority comprises authority to modify participation of devices in the user domain and apply domain policy to the devices in the user domain.

3. The method of claim 1, further comprising:
verifying that the second device may receive user domain management authority; and
transmitting a request to transfer user domain management authority from the first device to the second device.

4. The method of claim 3, wherein the step of transmitting a request to transfer user domain management authority is performed by the first device.

5. The method of claim 3, wherein the step of transmitting a request to transfer user domain management authority is performed by the second device.

6. The method of claim 3, further comprising:
receiving the request at the first device, the second device, or a delegation agent.

7. The method of claim 1, further comprising:
discharging the user domain management authority of the first device.

8. The method of claim 7, wherein the step of discharging comprises:
modifying a master key used to generate a user domain key chain.

9. The method of claim 1, further comprising:
transmitting a notification message to the devices in the user domain,
wherein the notification message notifies the devices in the user domain that user domain management authority is transferred from the first device to the second device.

10. The method of claim 9, wherein the step of transmitting a notification message is performed by the first device, the second device, or a delegation agent.

11. The method of claim 1, wherein the step of transferring further comprises:
consulting with a delegation agent.

12. The method of claim 11, wherein the delegation agent is a domain authority.

13. The method of claim 11, wherein the delegation agent is a content rights issuer.

14. The method of claim 11, further comprising:
transmitting a delegation notice to the delegation agent.

15. The method of claim 14, wherein the step of transmitting a delegation notice further comprises:
requesting the delegation agent to transfer user domain management information to the second device.

16. The method of claim 11, further comprising:
verifying whether the second device is in the user domain.

17. The method of claim 11, further comprising:
confirming whether the user domain management authority may be delegated to the second device.

18. The method of claim 17, wherein the step of confirming includes verifying that the first device and the second device are owned, operated by, or registered to a common user.

19. The method of claim 1, wherein content comprises multimedia content,
wherein the multimedia content is downloaded to and stored in a memory on a device or streamed to the device over a network connection.

20. The method of claim 1, wherein the step of transferring user domain management authority comprises:
transferring user domain management information for user domain management from the first device to the second device.

21. The method of claim 20, wherein user domain management information comprises user domain policy, user domain master key, and user domain key chain.

22. The method of claim 1, wherein the user domain is generated by a domain authority.

23. The method of claim 22, wherein the domain authority defines a domain policy for the user domain, and transmits the domain policy to a domain enforcement agent.

24. The method of claim 23, wherein the domain enforcement agent manages the domain user domain in accordance with the domain policy.

25. The method of claim 24, wherein the domain authority and the domain enforcement agent are integrated into a single entity.

26. A method for delegating management authority of a user domain having a plurality of devices, the devices having network connectivity to download content and share the downloaded content among the devices in the user domain, the method comprising:
transmitting, from a first device to a delegation agent, a request to transfer user domain management authority from a second device to the first device;
transferring user domain management authority from the second device to the first device; and
discharging the user domain management authority of the second device.

27. The method of claim 26, wherein the step of discharging comprises:
modifying a master key used to generate a user domain key chain.

28. The method of claim 26, further comprising:
transmitting a notification message to the devices in the user domain,
wherein the notification message notifies the devices in the user domain that user domain management authority is transferred from the second device to the first device.

29. The method of claim 28, wherein the step of transmitting a notification message is performed by the first device or a delegation agent.

30. The method of claim 26, further comprising:
verifying that the first device and the second device are owned, operated by, or registered to a common user.

31. The method of claim 26, wherein the step of transferring user domain management authority comprises:
transferring user domain management information for user domain management from a delegation agent to the first device.

32. The method of claim 31, wherein user domain management information comprises user domain policy, user domain master key, and user domain key chain.
